# EUROPEAN PATENT SPECIFICATION

(11) **EP 4 162 797 B1**
(45) Date of publication and mention of the grant of the patent: **27.03.2024**
(21) Application number: 22196400.0
(22) Date of filing: 19.09.2022
(51) Int. Cl.: A01M 7/00, B05B 1/20

(54) **SPRAYING MACHINE COMPRISING A SPRAY BOOM PROVIDED WITH A LOCKING ARRANGEMENT**
SPRITZMASCHINE MIT EINEM SPRÜHAUSLEGER MIT EINER VERRIEGELUNGSANORDNUNG
MACHINE DE PULVÉRISATION COMPRENANT UNE RAMPE DE PULVÉRISATION POURVUE D'UN AGENCEMENT DE VERROUILLAGE

(30) Priority: 07.10.2021 IT 202100025676
(43) Date of publication of application: 12.04.2023
(73) Proprietor: Toselli Societa' a Responsabilita' Limitata, 40017 San Giovanni in Persiceto (BO) (IT)
(72) Inventor: BERTAZZONI, Antonio, 42044 Gualtieri (RE) (IT)
(74) Representative: Corradini, Corrado

(56) References cited:
- EP-A1- 0 429 934
- EP-A1- 1 167 095
- US-A- 4 595 140

## Description

### Technical Field

The present invention relates to the agricultural machinery sector and, in particular, to the spraying machines that are designed to distribute liquid products, typically plant protection products, on agricultural land, for example for weeding and/or for the protection of crops in general.

### Prior art

As is known, the spraying machines schematically comprise a load-bearing structure on which there are installed at least one tank for the containment of the liquid product to be distributed, and a pump adapted to withdraw said liquid product from the tank and feed it to a spray boom provided with a plurality of spraying nozzles, through which the liquid product is dispensed outside and then distributed on the crops.

These spraying machines can be of the "mounted" type, that is, in which the load-bearing structure is installed directly on board an agricultural tractor, or of the "towed" type, that is, in which the load-bearing structure is provided with wheels and is adapted to be coupled to and towed by the agricultural tractor.

The load-bearing structure of such spraying machines comprises a frame that is connected to the agricultural tractor, and a counter-frame to which the spray boom is connected with the plurality of nozzles.

To allow the spray boom to remain substantially horizontal even during transport on an uneven ground, as is often the case on agricultural lands, the counter-frame carrying the spray boom may oscillate with respect to the frame.

In this way, as the frame jerks and tilts when driving on uneven ground, the counter-frame, under the effect of the weight force of the spray boom, responds to such jerks/tilts by oscillating with respect to the frame and by keeping the spray boom substantially horizontal.

Such spray booms generally comprise at least two arms arranged specularly with respect to a median plane of the machine, each of which is articulated to the counter-frame, so as to be able to rotate between an open position, in which it is adapted to dispense the liquid, and a closed position, in which the liquid is not dispensed.

In the open position, each arm protrudes from the load-bearing structure with a substantially horizontal orientation, i.e. parallel to the ground, while in the closed position, each arm is raised upwards reducing the footprint of the spraying machine.

When one of the two arms is brought into the closed position, e.g. to avoid hitting an obstacle or because the spraying machine is operating close to a road, the oscillation of the counter-frame must be locked with respect to the frame.

Otherwise, the imbalance caused by the weight of the arm remaining open would change the tilt of the counter-frame with respect to the frame, resulting in the arm remaining open being lowered and the possibility of the latter coming into contact with the ground.

For this reason, the known spraying machines are generally provided with an oleodynamic piston, complete with the relevant connections and valves for control, which allows to lock the oscillation of the counter-frame with respect to the frame when one of the two arms is brought into the closed position.

However, the use of this oleodynamic system significantly increases the cost, the footprint and the structural and construction complexity of the spraying machine. An example of a spraying machine according to the preamble of claim 1 is disclosed by EP 0 429 934 A1. It comprises a mechanical locking arrangement with toothed racks that are brought into contact with each other by applying an electric current to a magnet.

### Disclosure of the invention

One object of the present invention is to solve the aforementioned drawback of the prior art, making available an automatic locking system that is reliable but, at the same time, simpler and cheaper than the current oleodynamic system.

These and other objects are reached thanks to the characteristics of the invention as set forth in the independent claims. The dependent claims outline preferred and/or particularly advantageous aspects of the invention but not strictly necessary for implementing it. In particular, the invention makes available a spraying machine comprising:
- a support frame adapted to be connected to a towing vehicle,
- an oscillating counter-frame connected to the support frame by means of an oscillating arrangement,
- a spray boom comprising at least:
   ∘ a first arm hinged to the counter-frame according to a hinging axis, and
   ∘ a plurality of spraying nozzles installed on the first arm for dispensing a liquid product, the first arm being movable about said hinging axis between an open position and a closed position,
- a locking arrangement adapted to prevent the counter-frame from oscillating with respect to the support frame, in at least a first oscillation direction, when the first arm is in the closed position, said locking arrangement comprising:
   ∘ a plate pivoted on the counter-frame according to a fulcrum axis parallel to the hinging axis of the first arm,
   ∘ a spring having one end connected to the first arm and an opposed end connected to the plate,
   ∘ an indentation made in the plate, and
   ∘ a pin fixed to the support frame and having longitudinal axis parallel to the fulcrum axis of the plate,
wherein the plate is adapted to oscillate about the fulcrum axis between an unlocking position, in which the indentation is released from the pin allowing the oscillation of the counter-frame with respect to the support frame, and a locking position, in which the indentation is coupled to the pin preventing the oscillation of the counter-frame with respect to the support frame in at least said first oscillation direction, and wherein the spring is configured to rotate the plate about the fulcrum axis towards the unlocking position, when the first arm is in the open position, and to rotate the plate about the fulcrum axis towards the locking position, when the first arm is in the closed position.

Thanks to this solution, the invention makes available a purely mechanical locking arrangement, which does not require electrical power sources or electronic control mechanisms and/or hydraulic and/or auxiliary oleodynamic systems.

The particular construction structure of the locking arrangement in fact allows to automatically lock the oscillation of the counter-frame with respect to the frame, simply by effect of the movement of the arm from the open position into the closed position.

Another aspect of the invention provides that the locking arrangement may comprise a through slot made in the plate, which accommodates the pin and from which the indentation is derived.

In this way, the position of the pin, in any position of the first arm and therefore of the plate, is still circumscribed to the accommodation space overall defined by the slot and by the indentation.

The result is a substantially guided coupling between the pin and the plate, which makes the actuation operations of the locking arrangement particularly reliable and repeatable. Another aspect of the invention provides that the fulcrum axis of the plate of the locking arrangement may be coincident with the hinging axis of the first arm.

Thanks to this solution, the movement of the plate, consequent and simultaneous with the movement of the first arm, is particularly uniform and precise throughout its stroke. A further aspect of the invention provides that said first oscillation direction of the counter-frame with respect to the support frame can be concordant with the rotation direction of the first arm of the spray boom from the open position into the closed position.

In this way, the locking arrangement prevents the lifting of the arm towards the closed position from causing the opposite part of the counter-frame to lower, where there may be a second arm that would come into contact with the ground.

A preferred aspect of the invention provides in fact that the spray boom may comprise:
∘ a second arm hinged to the counter-frame according to a hinging axis parallel to the hinging axis of the first arm, and
∘ a plurality of spraying nozzles installed on the second arm for dispensing the liquid product, the second arm being arranged specularly to the first arm with respect to a median plane of the counter-frame and being movable about its hinging axis between an open position and a closed position.

In this context, the invention further provides for the presence of a second locking arrangement to prevent the oscillation of the counter-frame with respect to the support frame, in at least a second rotation direction opposite to the first rotation direction, when the second arm is in the closed position, wherein said second locking arrangement comprises:
∘ a second plate pivoted on the counter-frame according to a second fulcrum axis parallel to the hinging axis of the second arm,
∘ a second spring having one end connected to the second arm and an opposed end connected to the second plate,
∘ a second indentation made in the second plate, and
∘ a second pin fixed to the support frame and having longitudinal axis parallel to the fulcrum axis of the plate,
wherein the second plate is adapted to oscillate about the second fulcrum axis between an unlocking position, in which the second indentation is released from the second pin allowing the oscillation of the counter-frame with respect to the support frame, and a locking position, in which the second indentation is coupled to the second pin preventing the oscillation of the counter-frame with respect to the support frame in at least said second oscillation direction, and wherein the second spring is configured to rotate the second plate about the second fulcrum axis towards the unlocking position, when the second arm is in the open position, and to rotate the second plate about the second fulcrum axis towards the locking position, when the second arm is in the closed position.

Thanks to this solution, the spraying machine is overall able to operate both in a condition in which both arms are open, and in a condition in which the first arm is closed and the second arm is open, both in the condition in which the first arm is open and the second arm is closed, and in the condition in which both the first arm and the second arm are closed.

In fact, when the first arm is closed and the second arm is open, the locking arrangement associated with the first arm prevents the counter-frame from oscillating with respect to the frame in the direction that would cause the second arm to lower towards the ground. Similarly, when the first arm is open and the second arm is closed, the second locking arrangement associated with the second arm prevents the counter-frame from oscillating with respect to the frame in the opposite direction and which would cause the first arm to lower towards the ground.

When both arms are closed, the two locking arrangements ensure that the counter-frame is completely integral with the frame.

Another aspect of the invention provides that the second locking arrangement can comprise a second through slot made in the second plate, which accommodates the second pin and from which the second indentation is derived.

Thanks to this solution, also the position of the second pin, in any position of the second arm and therefore of the second plate, is also circumscribed to the accommodation space overall defined by the second slot and by the second indentation.

The result is a substantially guided coupling between the second pin and the second plate, which makes the actuation operations of the second locking arrangement particularly reliable and repeatable.

Another aspect of the invention provides that the second fulcrum axis of the second plate of the second locking arrangement may be coincident with the hinging axis of the second arm.

Thanks to this solution, the movement of the second plate, consequent and simultaneous with the movement of the second arm, is particularly uniform and precise throughout its stroke.

A further aspect of the invention provides that the second oscillation direction of the counter-frame with respect to the support frame can be concordant with the rotation direction of the second arm of the spray boom from the open position to the closed position.

This implies that the two arms are lifted towards their respective closed positions by rotating in opposite directions, significantly reducing the lateral footprint of the spraying machine.

According to a different aspect of the invention, the oscillating arrangement connecting the counter-frame to the frame may comprise:
- a first rocker arm provided with a first end hinged to the support frame with respect to a first rotation axis, and an opposed second end hinged to the counter-frame with respect to a second rotation axis; and
- a second rocker arm provided with a first end hinged to the support frame with respect to a third rotation axis, and an opposed second end hinged to the counter-frame with respect to a fourth rotation axis, the first rotation axis, the second rotation axis, the third rotation axis and the fourth rotation axis being parallel and distinct, and furthermore parallel to the hinging axis of the first arm.

Thanks to this solution, the oscillating arrangement has a particularly robust and at the same time effective architecture in allowing an oscillation of the counter-frame with respect to the frame, under the effect of the weight force of the counter-frame and of the spray boom connected to it, which keeps the spray boom substantially horizontal.

Another aspect of the invention provides that the second rocker arm may comprise (e.g., consist of) a linear actuator provided with a cylinder and with a stem that is slidable with respect to the cylinder between an extracted position and a retracted position, for varying the distance between said first end and said second end of the second rocker arm.

Thanks to this solution, by actively modifying the length of the linear actuator, it is advantageously possible to modify the geometry of the oscillating arrangement and therefore, when necessary, operate a controlled/commanded oscillation of the counter-frame with respect to the support frame to achieve a desired tilt of the spray boom.

In particular, the locking arrangement and the second locking arrangement are configured, thanks to the particular configuration of the slot and of the indentation of the plate and to the configuration of the second slot and of the second indentation of the second plate, so as to allow, even when the plate is in the locking position and/or when the second plate is in the locking position, the oscillation of the counter-frame with respect to the support frame by the actuator of the second rocker arm.

In other words, the locking arrangement and the second locking arrangement are configured to selectively lock the "free" oscillation of the counter-frame with respect to the support frame, i.e. the oscillation under the effect of the weight force of the counter-frame and of the spray boom, and at the same time allow under all conditions (i.e. even where such "free" oscillation is prevented) a "commanded" oscillation of the counter-frame with respect to the support frame by the actuator of the second rocker arm.

In this way, even when the plate is in the locking position and/or the second plate is in the locking position, it is possible to make a correction of the arrangement of the counter-frame with respect to the support frame, i.e. a correction of the orientation of the counter-frame with respect to the support frame, and therefore a correction of the orientation of the spray boom so as to place it with a desired orientation with respect to the ground on which the spraying machine is moving.

### Brief description of the drawings

Further features and advantages of the invention will be more apparent after reading the following description provided by way of a non-limiting example, with the aid of the accompanying figures.
Figure 1 is a view of a towing vehicle and of a spraying machine constituting a spraying apparatus according to the invention.
Figure 2 is a front view of the spraying machine of Figure 1, in which a first arm and a second arm are in an open position.
Figure 3 is a front view of the spraying machine of Figure 1, in which a first arm and a second arm are in an intermediate position between an open position and a closed position.
Figure 4 is a front view of the spraying machine of Figure 1, in which a first arm and a second arm are in a closed position.
Figure 5 is an enlarged view of the portion V of Figure 1.
Figure 6 is an enlarged view of the portion VI of Figure 1.
Figure 7 is an enlarged view of the portion VII of Figure 3.
Figure 8 is an enlarged view of the portion VIII of Figure 4.

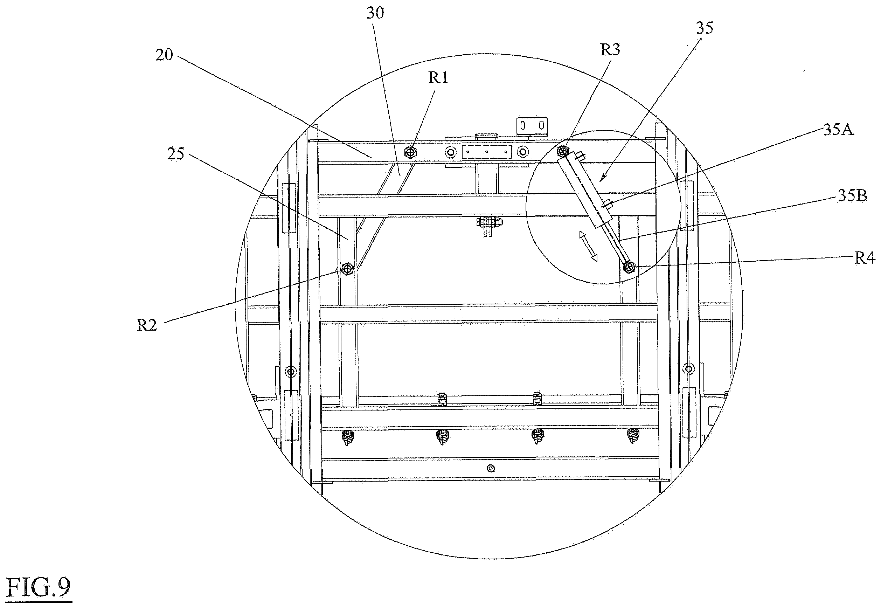

Figure 9 is an enlarged view in partial transparency of the portion IX of Figure 4.
Figure 10 is the view of Figure 9 in which a stem of an actuator is moved towards a retracted position.
Figure 11 is the view of Figure 9 in which a stem of an actuator is moved towards an extracted position.

### Detailed description

The figures show a spraying apparatus W comprising an agricultural vehicle V and a spraying machine 10 designed to distribute liquid products on the fields, typically plant protection products, for example for weeding and/or for the protection of crops in general. In particular, the spraying machine 10 illustrated herein is designed for the treatment of small plots of land, for example inside greenhouses, but it is not excluded that it can be redesigned and sized for the treatment of larger plots of land.

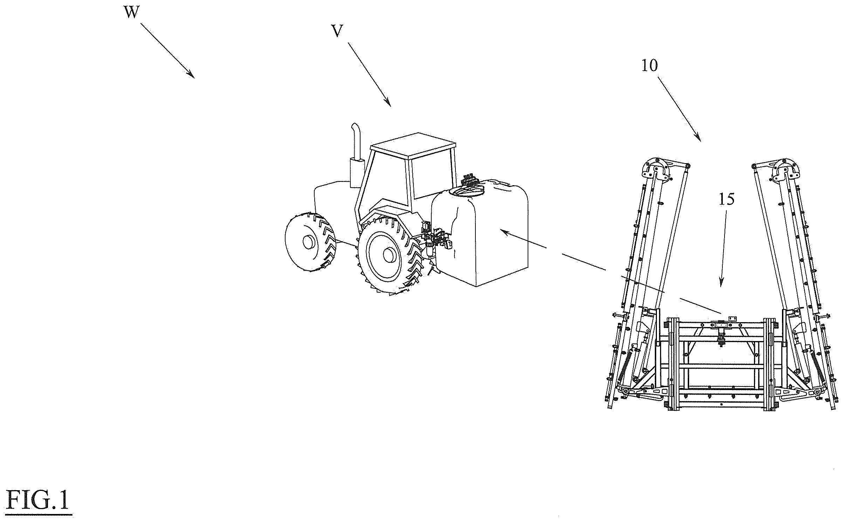

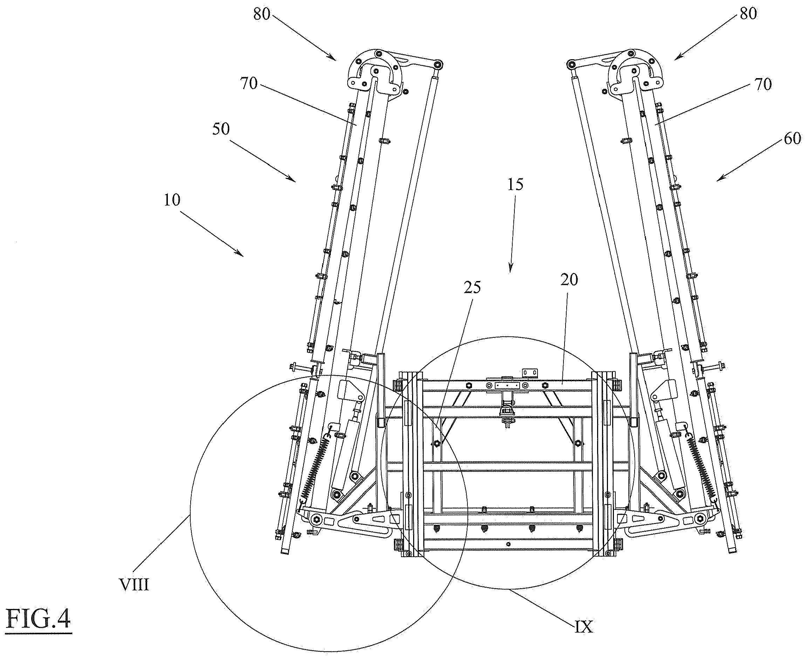

As can be seen in Figures 1 and 4, the spraying machine 10 first comprises a load-bearing structure 15.

In the event that the spraying machine 10 is made in the form of a so-called "towed" spraying machine 10, the load-bearing structure 15 will be provided with wheels (not visible in the accompanying figures) and will be adapted to be coupled and therefore towed by the agricultural vehicle V, for example an agricultural tractor as visible in Figure 1.

In the event that the spraying machine 10 is of the so-called "mounted" type, the load-bearing structure 15 will be installed on board (e.g. in the rear part) of the agricultural vehicle V.

In any case, the load-bearing structure 15 comprises a support frame 20, preferably rigid (i.e. not deformable by torsion and/or traction and/or bending when subjected to the usual loads for which it is intended, preferably of metal), which is adapted to be coupled or fixed to the agricultural vehicle V according to the methods outlined above.

In detail, the support frame 20 can comprise a lower crosspiece and an opposed upper crosspiece, superimposed and parallel to the lower crosspiece, which extend horizontally and transversely (e.g. orthogonally) with respect to a direction of travel of the spraying machine 10, and two opposed vertical uprights adapted to act as a connection between the lower crosspiece and the upper crosspiece.

As mentioned above, ground support and movement means (not illustrated), such as wheels or tracks, can be connected to the support frame 20.

In addition to the support frame 20, the load-bearing structure 15 also comprises a counter-frame 25, also preferably rigid (i.e. not deformable by torsion and/or tension and/or bending when subjected to the usual loads for which it is intended, preferably of metal). In detail, the counter-frame 25 can comprise a lower side member and an opposed upper side member, superimposed and parallel to the lower side member, which extend horizontally and transversely (e.g. orthogonally) with respect to the direction of travel of the spraying machine 10, and two opposed and parallel vertical side members adapted to act as a connection between the lower side member and the upper side member.

The opposite ends of the lower side member may project laterally from the vertical side members and may be connected to the vertical side members by means of respective oblique side members.

The counter-frame 25 is connected to the support frame 20 in an oscillating manner by means of an oscillating arrangement.

In particular, by means of the oscillating arrangement, the counter-frame 25 is able to oscillate with respect to the support frame 20 on an oscillation plane substantially orthogonal to the direction of travel of the spraying machine 10.

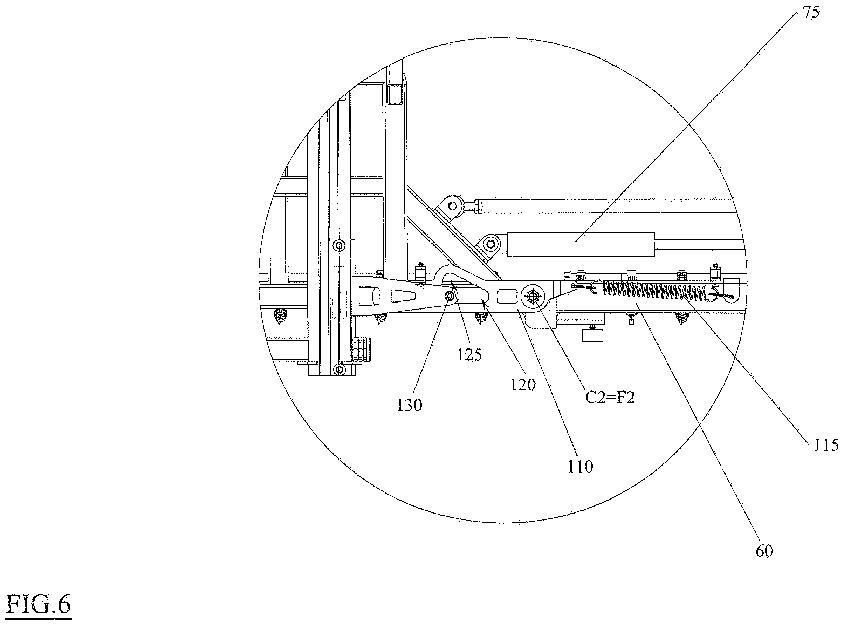

Preferably, the oscillating arrangement comprises (e.g. consists of) two rocker arms, wherein a first rocker arm 30 and a second rocker arm 35 illustrated in Figure 6.

Each rocker arm 30 and 35 is rigid, that is, non-deformable when subjected to the usual traction and/or torsion and/or compression and/or bending loads for which it is intended. The first rocker arm 30 is provided with a first end hinged to the support frame 20 with respect to a first rotation axis R1, preferably parallel to the direction of travel of the spraying machine 10.

For example, said first end of the first rocker arm 30 is hinged to the upper crosspiece of the support frame 20.

The first rocker arm 30 then has a second end, opposed to the first end, which is hinged to the counter-frame 25 with respect to a second rotation axis R2 parallel and distinct (spaced by a non-zero distance) from the first rotation axis R1.

In particular, the first rocker arm 30, by means of its second end, can be hinged at one of the vertical side members of the counter-frame 25.

The second rocker arm 35 is in turn provided with a first end hinged to the support frame 20 with respect to a third rotation axis R3 parallel to the first rotation axis R1 and to the second rotation axis R2 and distinct (spaced by a non-zero distance) from them.

For example, said first end of the second rocker arm 35 may be hinged to the upper crosspiece of the support frame 20, at a non-zero distance from the first end of the first rocker arm 30.

The second rocker arm 35 then has a second end, opposed to the first end, which is hinged to the counter-frame 25 with respect to a fourth rotation axis R4 parallel to the first rotation axis R1, to the second rotation axis R2, to the third rotation axis R3 and distinct (spaced by a non-zero distance) from each of them.

In particular, the second rocker arm 35, by means of its second end, can be hinged at the other vertical side member of the counter-frame 25, i.e. the one opposed to the vertical side member to which the first rocker arm 30 is hinged.

Thanks to this arrangement of the first and second rocker arm 30 and 35, the oscillating arrangement substantially assumes the configuration of an articulated quadrilateral.

Preferably, the second rocker arm 35 may comprise (e.g. consist of) a linear actuator provided with a cylinder 35A that makes the first end of the second rocker arm 35 available, and with a stem 35B that makes the second end of the second rocker arm 35 available.

The stem 35B of the linear actuator is slidably inserted in the cylinder 35A and is movable with respect to the latter between an extracted position and a retracted position, for varying the distance between the first end and the second end of the second rocker arm 35. By varying the distance between the first end and the second end of the second rocker arm 35, the linear actuator allows to modify the geometry of the articulated quadrilateral that defines the oscillating arrangement and thus to modify the position (orientation) of the counter-frame 25 with respect to the support frame 20.

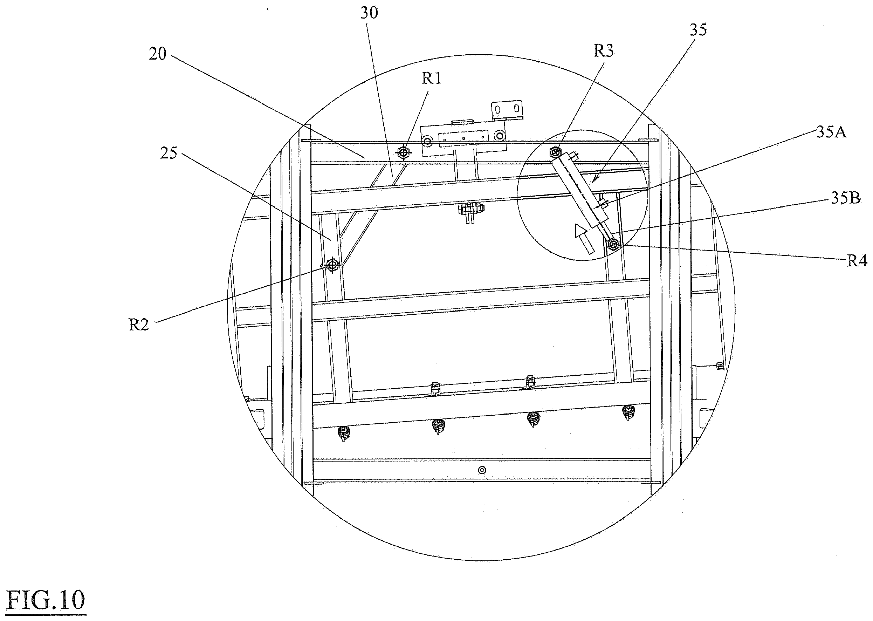

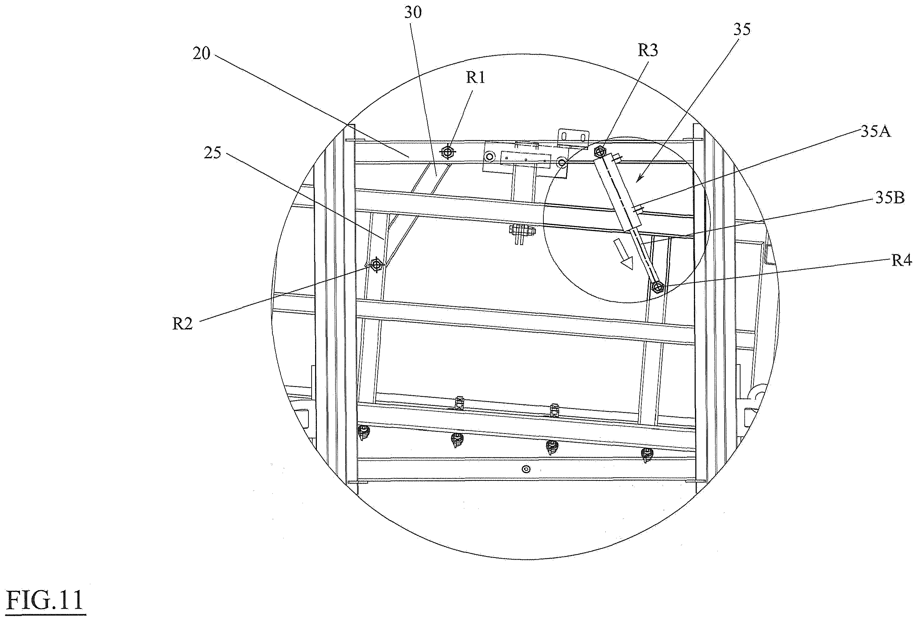

In particular, by actuating the stem 35B towards the retracted position (see Fig. 10), the actuator oscillates the counter-frame 25 with respect to the frame in one direction, for example counterclockwise, while by actuating the stem 35B towards the extracted position (see Fig. 11), the actuator oscillates the counter-frame 25 with respect to the support frame 20 in an opposite direction, for example clockwise.

The actuation of the actuator of the second rocker arm 35 may be of the oleodynamic type, so as to be able to lock the stem 35B in multiple positions with respect to the cylinder 35A.

However, it is not excluded that, in other embodiments, the actuator may be electric or of other type.

In all cases, the command of the actuator of the second rocker arm 35 may be manual or automatic.

In other words, the actuator of the second rocker arm 35 can be commanded by actuating a command device by an operator in charge, or it can be automatically managed by an electronic control unit.

On the load-bearing structure 15, in particular on the fixed frame 20, there may be installed a tank which is adapted to contain the liquid product to be dispensed on the crops and a pump (not visible in the figures), which can be actuated by the power take-off of the agricultural vehicle and is adapted to pump the liquid product contained in the tank towards a plurality of spraying nozzles through which the liquid product is dispensed outside and distributed on the crops.

The spraying nozzles of the plurality, which can be connected to the pump by means of suitable hydraulic conduits, are not described herein in greater detail since they are conventional in themselves.

A first set of these spraying nozzles can be installed directly on the counter-frame 25, so that the liquid product can be dispensed onto the strip of land being travelled over by the towing agricultural vehicle.

More precisely, this first set of spraying nozzles can be associated with the lower side member of the counter-frame 25.

A multiplicity of spraying nozzles is then associated with a spray boom, which is connected to the load-bearing structure 15 in such a way that it can protrude therefrom transversely (orthogonally) with respect to the direction of travel of the spraying machine 10. In particular, the spray boom may comprise a first arm 50 and a second arm 60 with preferably straight extension, which are connected to the counter-frame 25 in a mutually opposed position (e.g. symmetrical) with respect to a median transverse plane of the counter-frame 25 parallel to the direction of travel of the spraying machine 10, i.e. orthogonal to the oscillation plane of the counter-frame 25 with respect to the support frame 20. The first arm 50 and the second arm 60 are preferably identical to each other (in shape and size) and they furthermore have substantially the same weight (mass).

However, it cannot be ruled out that the first arm 50 and the second arm 60 may have a different shape and/or size, while preferably maintaining substantially the same weight (mass).

Nor is it excluded that, in some embodiments, the spray boom may comprise only one of the arms 50 and 60.

In any case, each arm 50 and/or 60 of the spraying machine 100 has an axial end hinged to the counter-frame 25, for example at a respective axial end of the lower side member, according to a respective hinging axis that is indicated respectively with C1 and C2 in the figures.

The hinging axes C1 and C2 are parallel to each other and preferably orthogonal to the plane in which the counter-frame 25 oscillates with respect to the frame 20, i.e. parallel to the transverse median plane of the counter-frame 25, for example substantially horizontal and parallel to the direction of travel of the spraying machine 10.

In general, the first arm 50 and the second arm 60 are therefore hinged to the counter-frame 25 and their hinging axes C1 and C2 are mutually parallel and distinct (spaced by a non-zero distance).

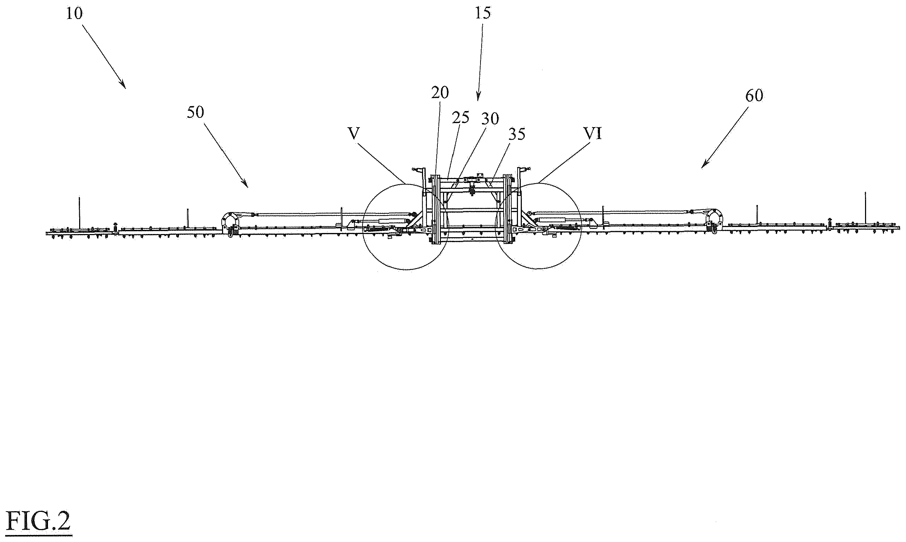

By rotating about the respective hinging axis C1 or C2, each arm 50 and 60 can move between an open position (visible in Figure 2) and a closed position (visible in Figure 4). In the respective open position, each arm 50 and 60 can protrude laterally from the counter-frame 25, resulting, for example, axially aligned with the lower longitudinal side member of the counter-frame 25 itself.

In this position, each arm 50 and 60 can generally be oriented horizontally or in any case parallel to the ground on which the spraying machine 10 is placed.

In this open position, therefore, each arm 50 and 60 is lowered and proximal to the ground.

In the respective closed position, each arm 50 and 60 can be oriented substantially vertically or can be slightly tilted with respect to the vertical, so as to reduce the lateral footprint of the spraying machine 10.

In this closed position, therefore, each arm 50 and 60 is raised and distal from the ground on which the spraying machine 10 is placed.

When in the closed position, each arm 50 and 60 can rest against a respective stop end that protrudes from the top of the nearest vertical longitudinal side member of the counter-frame 25.

When in the open position, each arm 50 and 60 can abut on one or more respective stop ends located at the axial ends of the lower longitudinal side member of the counter-frame 25, which act as a meniscus to prevent the arms from rotating further downwards.

In order to switch from the open position towards the closed position, the first arm 50 is adapted to rotate about the respective hinging axis C1 in a direction, for example clockwise with respect to the view of Figure 4.

In order to perform the same shift, the second arm 60 is instead adapted to rotate about the respective hinging axis C2 in the opposite direction, for example in a counterclockwise direction.

The actuation of each arm 50 and 60 between the open and closed position (and vice versa) can be achieved by means of a respective actuator 75, e.g. a respective hydraulic jack, preferably double-acting, which has a first end hinged to the corresponding arm 50 or 60 and an opposite end hinged to the counter-frame 25.

Preferably, each of these hydraulic jacks is entirely positioned above the respective arm 50 or 60, when the latter is in the open position, so that the footprints of the spraying machine 10 downwards do not increase.

For example, the first end of each hydraulic jack can be hinged to special brackets fixed to the respective arm 50 or 60 while the second end can be articulated to special brackets fixed to the nearest oblique side member of the counter-frame 25.

In the illustrated example, each arm 50 and 60 may be provided with an appendage, which is preferably adapted to support a further set of spraying nozzles.

This appendage can be realized in the form of a profile 70 with preferably straight extension, an axial end of which is hinged to the respective arm 50 or 60, for example at the axial end opposite to that hinged to the counter-frame 25, according to a hinge axis parallel and spaced with respect to the hinging axis C1 or C2.

By rotating about this hinge axis, the profile 70 can move with respect to the respective arm 50 or 60 between an extended position, in which it is substantially aligned with the arm itself, and a retracted position, in which it can be folded below the arm.

By the words "below", it is meant that the profile 70 is adjacent to a flank of the respective arm 50 or 60 which, when the latter is in the open position, is facing downwards or towards the ground.

The actuation of the profile 70 of each arm 50 and 60 between the extended and retracted position (and vice versa) can be achieved by means of a respective kinematic mechanism 80, which is adapted to transform the rotation of the relative arm 50 or 60 with respect to the counter-frame 25 into a corresponding rotation of the profile 70 about the hinge axis. A kinematic mechanism 80 is generally understood to be a system of mechanical elements that are rigid but mutually connected by means of joints that allow a certain level of relative motion among the parts (degrees of freedom).

In this sense, a kinematic mechanism 80 is therefore to be understood as a system without any motor or other actuator.

In the present case, the kinematic mechanism 80 is preferably configured to transform a rotation of the relative arm 50 or 60 (in a certain direction) into a corresponding rotation of the corresponding profile 70 in the opposite direction (and vice versa).

In this way, the overall synchronised movement of each arm 50 and 60 and of the relative profile 70 is similar to that of a gull wing.

However, it is not excluded that, in other embodiments, the spray boom comprises only the first and second arm 50 and 60.

The first arm 50 of the spray boom is further associated with a first locking arrangement, which is adapted to prevent the oscillation of the counter-frame 25 with respect to the support frame 20, when the first arm 50 is in the closed position and possibly the second arm 60 is still in the open position.

In this condition, the weight of the second arm 60 would in fact tend to oscillate the counter-frame 25 with respect to the support frame 20 in the direction corresponding to a lowering of the second arm 60 itself, in this case clockwise direction with respect to Figure 4. The first locking arrangement is therefore adapted to prevent the oscillation of the counter-frame 25 at least in this first direction, in order to prevent the second arm 60 from touching the ground.

It is wished to point out here that the oscillation direction that is prevented by the first locking arrangement is concordant with the rotation direction of the first arm 50 from the open position to the closed position.

In order to fulfil its function, the locking arrangement firstly comprises a plate 85, which can be defined by a reduced-thickness metal sheet elongated along its own longitudinal axis.

This plate 85 is pivoted to the counter-frame 25 according to a fulcrum axis F1 parallel and preferably coincident with the hinging axis C1 of the first arm 50.

For example, the plate 85 may be pivoted to the counter-frame 25 by means of a hinge pin defining both the hinging axis C1 of the first arm 50 and the fulcrum axis F1 of the plate 85, i.e., while achieving the hinging of the first arm 50 to the counter-frame 25 and acting as the fulcrum for the plate 85.

The locking arrangement then comprises a spring 90, preferably a traction spring, which has an end connected to the first arm 50 and an opposed end connected to the plate 85 at a point spaced from the fulcrum axis F1, for example at an axial end of the plate 85 proximal to the first arm 50.

During rotation of the first arm 50 from the open position to the closed position and vice versa, the plate 85 rotates about the fulcrum axis F1 actuated by the elastic traction force exerted by the spring 90.

In particular, the spring 90 exerts an elastic traction force mainly along a traction axis parallel (and coincident) with a longitudinal central axis of the spring 90 itself.

During rotation of the first arm 50 between the open position and the closed position, the spring 90 rotates with the first arm 50 and its traction axis shifts from one side to the other with respect to the fulcrum axis F1 of the plate 85 (and therefore to the hinging axis C1 of the first arm 50).

Thanks to this, the spring 90 is able to rotate the plate 85 about the fulcrum axis F1 in both directions, depending on the angular position of the first arm 50 about the hinging axis C1.

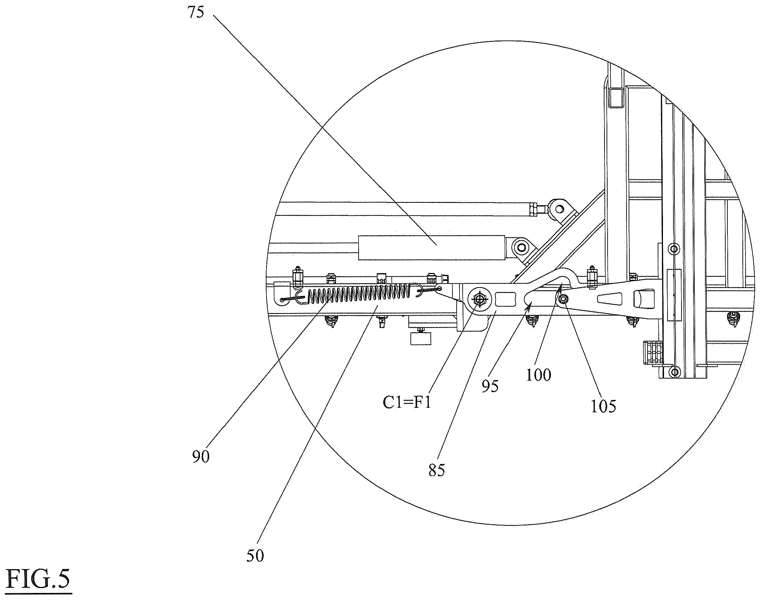

In particular, when the first arm 50 is in the open position, the traction axis of the spring 90 passes above the fulcrum axis F1, tending to make the plate 95 rotate in a counterclockwise direction (compared to Figure 5).

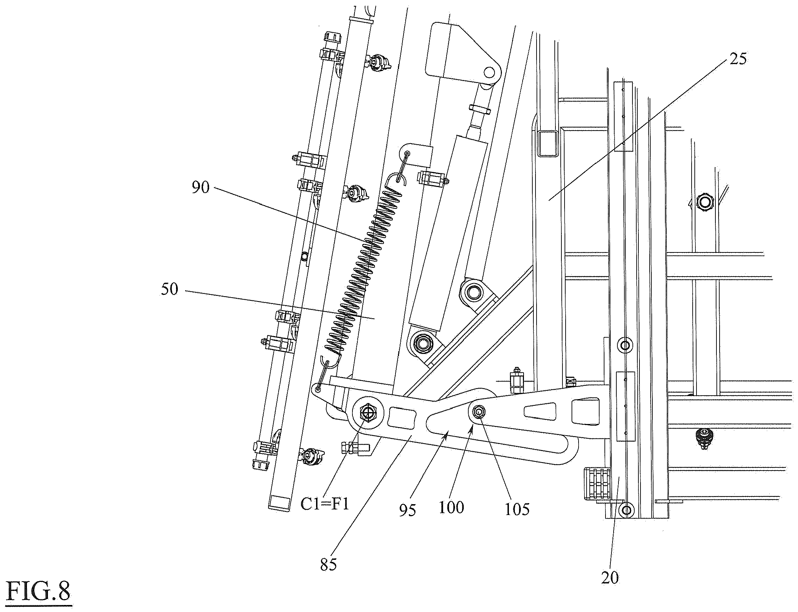

On the other hand, when the first arm 50 is in the closed position, the traction axis of the spring 90 passes on the other side of the fulcrum axis F1, tending to make the plate 95 rotate in the opposite direction, e.g. clockwise (see Figure 8).

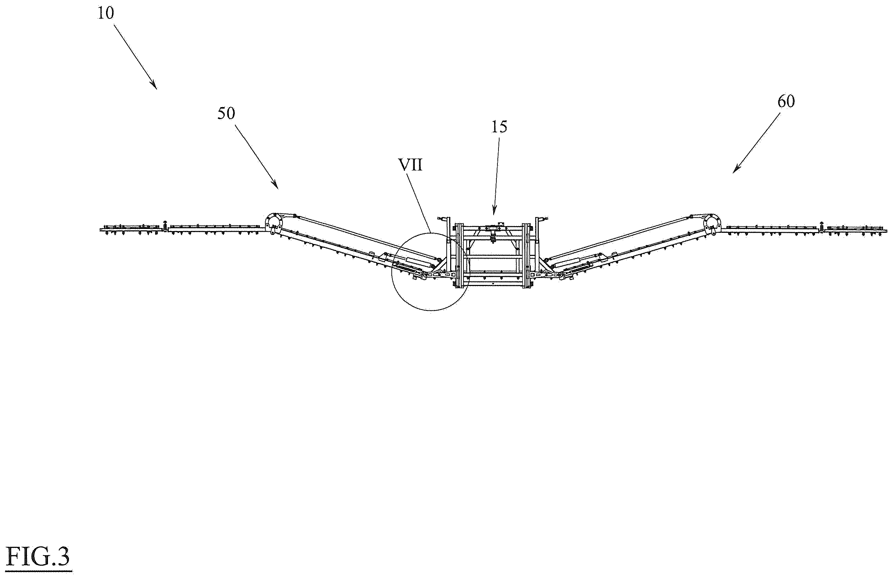

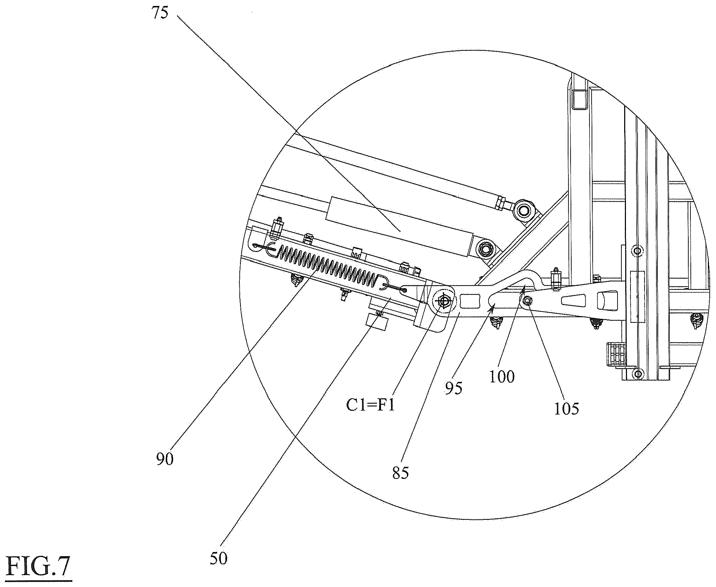

Of course, by moving between these two extreme positions, the first arm 50 will also pass from an intermediate position (illustrated in Figures 3 and 7), in which the traction axis of the spring 90 intersects the fulcrum axis F1 without exerting any action on the plate 95. In any case, when the first arm 50 shifts from the open position into the closed position or vice versa, the overall effect of the spring 90 is to force the plate 85 to rotate about the fulcrum axis F1 in a direction concordant with the rotation direction of the first arm 50 about the hinging axis C1.

For example, when the first arm 50 rotates in a clockwise direction towards the closed position, the plate 85 is likewise forced to rotate about the fulcrum axis F1 in a clockwise direction, while when the first arm 50 rotates in a counterclockwise direction towards the open position, the plate 85 is likewise forced to rotate about the fulcrum axis F1 in a counterclockwise direction.

A through slot 95, which extends longitudinally in a direction parallel to the longitudinal axis of the plate 85 itself, can be made in the plate 85 itself.

In the plate 85, a (through) indentation 100, which can be derived from the slot 95 with which it communicates and of which it represents a kind of "widening", can be further made.

For example, the indentation 100 derives from and "widens" the through slot 95 in a direction away from the ground on which the spraying machine 10 moves.

In essence, the indentation 100 defines together with the through slot 95 a single accommodation space.

The locking arrangement further comprises a pin 105, which is fixed to the support frame 20 (preferably without residual degrees of freedom) and has a longitudinal axis parallel to the fulcrum axis F1 of the plate 85, i.e. parallel to the hinging axis C1 of the first arm 50. The pin 105 is accommodated within the accommodation space overall defined by the slot 95 and by the indentation 100 and is able to shift therein.

The pin 105 preferably has a shape at least partially conjugate to the shape of the indentation 100 made in the plate 85.

In particular, during the shifts of the first arm 50 between the open position and the closed position, the plate 85 (pulled by the spring 90) is adapted to oscillate about the fulcrum axis F1 between two end positions, of which an unlocking position, corresponding to the open position of the first arm 50, and a locking position, corresponding to the closed position of the first arm 50.

In the unlocking position (see Fig. 5), the indentation 100 is released from the pin 105, which is accommodated within the portion of accommodation space defined by the slot 95.

In this unlocking position, the pin 105 is then free to move with play within the slot 95, allowing the oscillation of the counter-frame 25 with respect to the support frame 20.

This is also thanks to the action of the spring 90 which continues to pull the plate 85 towards the unlocking position, i.e. which maintains a traction force which tends to rotate the plate 85 in the direction corresponding to a movement of the indentation 100 away from the pin 105.

In the locking position (s. Fig. 8) the indentation 100 is instead coupled to the pin 105 and prevents the oscillation of the counter-frame 25 with respect to the support frame 20 in the already mentioned first oscillation direction.

In other words, during rotation of the first arm 50 from the open position into the closed position, the plate 85 rotates towards (and into) the locking position, with the pin 105 shifting from the slot 95 to the indentation 100, abutting the indentation 100 itself.

More precisely, the indentation 100 can circumferentially embrace at least a part of the pin 105 inserted therein, defining with the latter a shape coupling that prevents the oscillation of the counter-frame 25 with respect to the support frame 20 in the first oscillation direction.

To facilitate the coupling between the pin 105 and the indentation 100, the latter can be connected to the slot 95 by means of a chamfer and/or suitably rounded edges.

The locking position is then maintained thanks to the action of the spring 90 which, as long as the first arm 50 remains in the closed position, continues to generate a traction force that tends to rotate the plate 85 in the direction that corresponds to an approach between the pin 105 and the indentation 100 (and to a mutual coupling).

The spraying machine 10 finally comprises a second locking arrangement, which is adapted to prevent the oscillation of the counter-frame 25 with respect to the support frame 20, when the second arm 60 is in the closed position and possibly the first arm 50 is still in the open position.

In this condition, the weight of the first arm 50 would in fact tend to oscillate the counter-frame 25 with respect to the support frame 20 in the direction corresponding to a lowering of the first arm 50 itself, in this case in a counterclockwise direction with respect to Figure 4.

The second locking arrangement is therefore adapted to prevent the oscillation of the counter-frame 25 at least in this second direction, in order to prevent the first arm 60 from touching the ground.

It is wished to point out here that the oscillation direction that is prevented by the second locking arrangement is concordant with the rotation direction of the second arm 60 from the open position to the closed position, and is opposite to the oscillation direction that is prevented by the first locking arrangement described above.

In this way, when both arms 50 and 60 are in the closed position (as illustrated in Figure 4), the counter-frame 25 is completely locked with respect to the support frame 120, without any possibility of oscillation, except by modifying the geometry of the articulated quadrilateral defining the oscillating arrangement as explained above.

The second locking arrangement associated with the second arm 60 is substantially identical to the locking arrangement associated with first arm 50, i.e. it is formed by equivalent constituent elements and operates according to the same operating principle.

In particular, the second locking arrangement comprises a second plate 110, which can be defined by a reduced-thickness metal sheet elongated along its own longitudinal axis. This second plate 110 is pivoted on the counter-frame 25 according to a second fulcrum axis F2 parallel and preferably coincident with the hinging axis C2 of the second arm 60. For example, the second plate 110 may be pivoted to the counter-frame 25 by means of a hinge pin defining both the hinging axis C2 of the second arm 60 and the second fulcrum axis F2 of the second plate 110, i.e., while achieving the hinging of the second arm 60 to the counter-frame 25 and acting as the fulcrum for the second plate 110.

The second locking arrangement then comprises a second spring 115, preferably a traction spring, which has an end connected to the second arm 60 and an opposed end connected to the second plate 110 at a point spaced from the fulcrum axis F2, for example at an end of the second plate 110 proximal to the second arm 60.

During rotation of the second arm 60 from the open position into the closed position and vice versa, the second plate 110 rotates about the fulcrum axis F2 actuated by the elastic traction force exerted by the second spring 115.

In particular, the second spring 115 exerts an elastic traction force mainly along a traction axis parallel (and coincident) with a longitudinal central axis of the second spring 115 itself.

During rotation of the second arm 60 between the open position and the closed position, the second spring 115 rotates with the second arm 60 and its traction axis shifts from one side to the other with respect to the second fulcrum axis F2 of the second plate 110 (and therefore to the hinging axis C2 of the second arm 60).

Thanks to this, the second spring 115 is able to rotate the second plate 110 about the second fulcrum axis F2 in both directions, depending on the angular position of the second arm 60 about the hinging axis C2.

In particular, when the second arm 60 is in the open position, the traction axis of the second spring 115 passes above the fulcrum axis F2, tending to make the second plate 110 rotate in a clockwise direction (compared to the view in Figure 6).

On the other hand, when the second arm 60 is in the closed position, the traction axis of the second spring 115 passes on the other side of the fulcrum axis F2, tending to make the second plate 110 rotate in the opposite direction, for example counterclockwise.

Of course, by moving between these two extreme positions, the second arm 50 will also pass from an intermediate position, where the traction axis of the second spring 115 intersects the fulcrum axis F2 without exerting any action on the second plate 110.

In any case, when the second arm 60 shifts from the open position into the closed position or vice versa, the overall effect of the second spring 115 is to force the second plate 110 to rotate about the second fulcrum axis F2 in a direction concordant with the rotation direction of the second arm 60 about the hinging axis C2.

For example, when the second arm 60 rotates in a counterclockwise direction towards the closed position, also the second plate 110 itself rotates about the second fulcrum axis F2 in a counterclockwise direction, while when the second arm 60 rotates in a clockwise direction towards the open position, likewise the second plate 110 rotates about the second fulcrum axis F2 in a clockwise direction.

In the second plate 110, a second through slot 120, which extends longitudinally in a direction parallel to the longitudinal axis of the second plate 110 itself, can be made.

In the second plate 110, a second (through) indentation 125, which can be derived from the second slot 120 with which it communicates and of which it represents a kind of "widening", can be further made.

For example, the second indentation 125 is derived from and "widens" the second through slot 120 in a direction away from the ground on which the spraying machine 10 moves. Essentially, the second indentation 125 defines together with the second slot 120 a single second accommodation space.

The second locking arrangement further comprises a second pin 130, which is fixed to the support frame 20 (preferably without residual degrees of freedom) and has a longitudinal axis parallel to the fulcrum axis F2 of the second plate 110, i.e. parallel to the hinging axis C2 of the second arm 60.

The second pin 130 is accommodated within the second accommodation space overall defined by the second slot 120 and by the second indentation 125 and is able to shift therein.

The second pin 130 preferably has a shape at least partially conjugate to the shape of the second indentation 135 made in the second plate 110.

In particular, during the shifts of the second arm 60 between the open position and the closed position, the second plate 110 (pulled by the second spring 115) is adapted to oscillate about the second fulcrum axis F2 between two end positions, of which an unlocking position, corresponding to the open position of the second arm 60, and a locking position, corresponding to the closed position of the second arm 60.

In the unlocking position (see Fig. 6) the second indentation 125 is released from the second pin 130, which is accommodated within the portion of the second accommodation space defined by the second slot 120.

In such an unlocking position, the second pin 130 is then free to move with play within the second slot 120, allowing the oscillation of the counter-frame 25 with respect to the support frame 20.

This is also thanks to the action of the second spring 115 which continues to pull the second plate 110 towards the unlocking position, i.e. which maintains a traction force which tends to rotate the second plate 110 in the direction corresponding to a movement of the second indentation 125 away from the second pin 130.

In the locking position (not illustrated but specular to Fig. 8) the second indentation 125 is instead coupled to the second pin 130 and prevents the oscillation of the counter-frame 25 with respect to the support frame 20 in the already mentioned second oscillation direction.

In other words, during rotation of the second arm 60 from the open position into the closed position, the second plate 110 rotates towards (and into) the locking position, with the second pin 130 shifting from the slot 120 to the second indentation 125, abutting on the second indentation 125 itself.

More precisely, the second indentation 125 can circumferentially embrace at least a part of the second pin 130 inserted therein, defining with the latter a shape coupling that prevents the oscillation of the counter-frame 25 with respect to the support frame 20 in the second oscillation direction.

To facilitate the coupling between the second pin 130 and the second indentation 125, the latter can be connected to the second slot 20 by means of a chamfer and/or appropriately rounded edges.

The locking position is then maintained thanks to the action of the second spring 115 which, as long as the second arm 60 remains in the closed position, continues to generate a traction force that tends to rotate the second plate 110 in the direction that corresponds to an approach between the second pin 130 and the second indentation 100 (and to a mutual coupling).

The locking arrangement and the second locking arrangement are configured to allow, even when the plate 85 is in the locking position and/or when the second plate 110 is in the locking position, the oscillation of the counter-frame 25 with respect to the support frame 20 by the actuator of the second rocker arm 35.

In other words, the locking arrangement and the second locking arrangement are configured to selectively lock the "free" oscillation of the counter-frame 25 with respect to the support frame 20, i.e. the oscillation under the effect of the weight force of the counter-frame 25 and of the spray boom, and at the same time to allow under all conditions (that is, even where such "free" oscillation is prevented) a "commanded" oscillation of the counter-frame 25 with respect to the support frame 20 by the actuator of the second rocker arm 35.

In this way, even when the plate is in the locking position and/or the second plate is in the locking position, it is possible to make a correction of the arrangement of the counter-frame 25 with respect to the support frame 20, i.e. a correction of the orientation of the counter-frame 25 on the oscillation plane with respect to the support frame 20, and therefore a correction of the orientation of the spray boom (i.e. of the first arm 50 and/or of the second arm 60) so as to place it with a desired orientation (on said oscillation plane) with respect to the ground on which the spraying machine 10 moves.

For example, with the first arm 50 in the closed position and the second arm 60 in the open position, it is possible, by actuating the actuator of the second rocker arm 35, to oscillate the counter-frame 25 with respect to the support frame 20 in said second direction, so as to move the second arm 60 away from the ground and, preferably, to arrange it substantially parallel to the ground itself.

At the same time, during the oscillation of the second rocker arm 35 by the actuator in the second direction, thanks to the particular shape of the slot 95 and of the indentation 100 made in the plate 85, the pin 105 remains in any case inserted inside the indentation 100 and the plate 85 continues to rotate towards the (and into) the locking position thanks to the traction action of the spring 90.

In practice, the locking arrangement continues to prevent the "free" oscillation (i.e. due to the effect of the weight force) of the counter-frame 25 with respect to the support frame 20 in the first direction, while allowing (at the same time) the commanded oscillation (i.e. by actuation of the actuator of the second rocker arm 35) of the counter-frame 25 with respect to the support frame 20 in the second direction.

Similarly, with the second arm 60 in the closed position and the first arm 50 in the open position, it is possible, by actuating the actuator of the second rocker arm 35, to oscillate the counter-frame 25 with respect to the support frame 20 in said first direction, so as to move the first arm 50 away from the ground and, preferably, to place it substantially parallel to the ground itself.

At the same time, during the oscillation of the second rocker arm 35 by the actuator in the first direction, thanks to the particular conformation of the second slot 120 and of the second indentation 125 made in the second plate 110, the pin 130 remains in any case inserted inside the second indentation 125 and the second plate 110 continues to rotate towards the (and into) the locking position thanks to the traction action of the second spring 115.

In practice, the second locking arrangement continues to prevent the "free" oscillation (i.e. due to the effect of weight force) of the counter-frame 25 with respect to the support frame 20 in the second direction, while allowing (at the same time) the commanded oscillation (i.e. by actuation of the actuator of the second rocker arm 35) of the counter-frame 25 with respect to the support frame 20 in the first direction.

The invention thus conceived is susceptible to several modifications and variations, all falling within the scope of the claims.

In practice, the materials used, as well as the contingent shapes and sizes, can be whatever according to the requirements without for this reason departing from the scope of protection of the following claims.

## Claims

1. Spraying machine (10) comprising:
- a support frame (20) adapted to be connected to a towing vehicle,
- an oscillating counter-frame (25) connected to the support frame (20) by means of an oscillating arrangement,
- a spray boom comprising at least:
∘ a first arm (50) hinged to the counter-frame (25) according to a hinging axis (C1), and
∘ a plurality of spraying nozzles installed on the first arm (50) for dispensing a liquid product,
the first arm (50) being movable about said hinging axis (C1) between an open position and a closed position,
- a locking arrangement adapted to prevent the counter-frame (25) from oscillating with respect to the support frame (20), in at least a first oscillation direction, when the first arm (50) is in the closed position, **characterized in that**
said locking arrangement comprises:
∘ a plate (85) pivoted on the counter-frame (25) according to a fulcrum axis (F1) parallel to the hinging axis (C1) of the first arm (50),
∘ a spring (90) having one end connected to the first arm (50) and an opposed end connected to the plate (85),
∘ an indentation (100) made in the plate (85), and
∘ a pin (105) fixed to the support frame (20) and having longitudinal axis parallel to the fulcrum axis of the plate (85),
wherein the plate (85) is adapted to oscillate about the fulcrum axis (F1) between an unlocking position, in which the indentation (100) is released from the pin (105) allowing the oscillation of the counter-frame (25) with respect to the support frame (20), and a locking position, in which the indentation (100) is coupled to the pin (105) preventing the oscillation of the counter-frame (25) with respect to the support frame (20) in at least said first oscillation direction, and
wherein the spring (90) is configured to rotate the plate (85) about the fulcrum axis (F1) towards the unlocking position, when the first arm (50) is in the open position, and to rotate the plate (85) about the fulcrum axis towards the locking position, when the first arm (50) is in the closed position.

2. Spraying machine (10) according to claim 1, wherein the locking arrangement comprises a through slot (95) made in the plate (85), which accommodates the pin (105) and from which the indentation (100) is derived.

3. Spraying machine (10) according to any one of the preceding claims, wherein the fulcrum axis (F1) of the plate (85) of the locking arrangement is coincident with the hinging axis (C1) of the first arm (50).

4. Spraying machine (10) according to any one of the preceding claims, wherein said first oscillation direction of the counter-frame (25) with respect to the support frame (20) is concordant with the rotation direction of the first arm (50) of the spray boom from the open position to the closed position.

5. Spraying machine (10) according to any one of the preceding claims, wherein the spray boom comprises:
∘ a second arm (60) hinged to the counter-frame (25) according to a hinging axis (C2) parallel to the hinging axis (C1) of the first arm (50), and
∘ a plurality of spraying nozzles installed on the second arm (60) for dispensing the liquid product,
the second arm (60) being arranged specularly to the first arm (50) with respect to a median plane of the counter-frame (25) and being movable about its hinging axis (C2) between an open position and a closed position,
a second locking arrangement being provided to prevent the oscillation of the counter-frame (25) with respect to the support frame (20), in at least a second rotation direction opposite to the first rotation direction, when the second arm (60) is in the closed position, said second locking arrangement comprising:
∘ a second plate (110) pivoted on the counter-frame (25) according to a second fulcrum axis (F2) parallel to the hinging axis (C2) of the second arm (60),
∘ a second spring (115) having one end connected to the second arm (60) and an opposed end connected to the second plate (110),
∘ a second indentation (125) made in the second plate (110), and
∘ a second pin (130) fixed to the support frame (20) and having longitudinal axis parallel to the fulcrum axis of the plate (85),
wherein the second plate (110) is adapted to oscillate about the second fulcrum axis (F2) between an unlocking position, in which the second indentation (125) is released from the second pin (130) allowing the oscillation of the counter-frame (25) with respect to the support frame (20), and a locking position, in which the second indentation (125) is coupled to the second pin (125) preventing the oscillation of the counter-frame (25) with respect to the support frame (20) in at least said second oscillation direction, and
wherein the second spring (115) is configured to rotate the second plate (110) about the second fulcrum axis (F2) towards the unlocking position, when the second arm (60) is in the open position, and to rotate the second plate (110) about the second fulcrum axis (F2) towards the locking position, when the second arm (60) is in the closed position.

6. Spraying machine (10) according to claim 5, wherein the second locking arrangement comprises a second through slot (120) made in the second plate (110), which accommodates the second pin (130) and from which the second indentation (125) is derived.

7. Spraying machine (10) according to claim 5 or 6, wherein the second fulcrum axis (F2) of the second plate (110) of the second locking arrangement is coincident with the hinging axis (C2) of the second arm (60).

8. Spraying machine (10) according to any one of claims 5 to 7, wherein said second oscillation direction of the counter-frame (25) with respect to the support frame (20) is concordant with the rotation direction of the second arm (60) of the spray boom from the open position to the closed position.

9. Spraying machine (10) according to any one of the preceding claims, wherein the oscillating arrangement comprises:
- a first rocker arm (30) provided with a first end hinged to the support frame (20) with respect to a first rotation axis (R1), and an opposed second end hinged to the counter-frame (25) with respect to a second rotation axis (R2); and
- a second rocker arm (35) provided with a first end hinged to the support frame (20) with respect to a third rotation axis (R3), and an opposed second end hinged to the counter-frame (25) with respect to a fourth rotation axis (R4), the first rotation axis (R1), the second rotation axis (R2), the third rotation axis (R3) and the fourth rotation axis (R4) being parallel and distinct, and furthermore parallel to the hinging axis (C1) of the first arm (50).

10. Spraying machine (10) according to claim 9, wherein the second rocker arm (35) comprises a linear actuator provided with a cylinder (35A) and with a stem (35B) that is slidable with respect to the cylinder (35A) between an extracted position and a retracted position, for varying the distance between said first end and said second end of the second rocker arm (35).

## Patentansprüche

1. Sprühmaschine (10), umfassend:
- einen Tragrahmen (20), der angepasst ist, um mit einem Zugfahrzeug verbunden zu werden,
- einen schwingenden Gegenrahmen (25), der durch eine schwingende Anordnung mit dem Tragrahmen (20) verbunden ist,
- einen Sprühausleger, mindestens umfassend:
○ einen ersten Arm (50), der gemäß einer Gelenkachse (C1) an dem Gegenrahmen (25) angelenkt ist, und
○ eine Vielzahl von Sprühdüsen, die an dem ersten Arm (50) installiert sind, um ein flüssiges Produkt auszugeben,
wobei der erste Arm (50) um die Gelenkachse (C1) zwischen einer offenen und einer geschlossenen Stellung beweglich ist,
- eine Verriegelungsanordnung, die angepasst ist, um ein Schwingen des Gegenrahmens (25) in Bezug auf den Tragrahmen (20) in mindestens einer ersten Schwingungsrichtung zu verhindern, wenn der erste Arm (50) in der geschlossenen Stellung ist,
**dadurch gekennzeichnet, dass** die Verriegelungsanordnung Folgendes umfasst:
∘ eine Platte (85), die an dem Gegenrahmen (25) gemäß einer Drehpunktachse (F1) parallel zu der Gelenkachse (C1) des ersten Arms (50) schwenkt,
∘ eine Feder (90), deren eines Ende mit dem ersten Arm (50) und deren gegenüberliegendes Ende mit der Platte (85) verbunden ist,
∘ eine Vertiefung (100), die in der Platte (85) angefertigt ist, und
∘ einen Stift (105), der am Tragrahmen (20) befestigt ist und eine Längsachse parallel zu der Drehachse der Platte (85) aufweist,
wobei die Platte (85) angepasst ist, um zwischen einer Entriegelungsstellung, in der die Vertiefung (100) von dem Stift (105) gelöst ist, was die Schwingung des Gegenrahmens (25) in Bezug auf den Tragrahmen (20) zulässt, und einer Verriegelungsstellung, in der die Vertiefung (100) mit dem Stift (105) gekoppelt ist, was die Schwingung des Gegenrahmens (25) in Bezug auf den Tragrahmen (20) zumindest in der ersten Schwingungsrichtung verhindert, um die Drehachse (F1) zu schwingen, und
wobei die Feder (90) konfiguriert ist, um die Platte (85) um die Drehpunktachse (F1) in Richtung der Entriegelungsstellung zu drehen, wenn der erste Arm (50) in der offenen Stellung ist, und um die Platte (85) um die Drehpunktachse in Richtung der Verriegelungsstellung zu drehen, wenn der erste Arm (50) in der geschlossenen Stellung ist.

2. Sprühmaschine (10) nach Anspruch 1, wobei die Verriegelungsanordnung einen in der Platte (85) angefertigten Durchgangsschlitz (95) umfasst, der den Stift (105) aufnimmt und von dem die Vertiefung (100) abgeleitet ist.

3. Sprühmaschine (10) nach einem der vorherigen Ansprüche, wobei die Drehachse (F1) der Platte (85) der Verriegelungsanordnung mit der Gelenkachse (C1) des ersten Arms (50) übereinstimmt.

4. Sprühmaschine (10) nach einem der vorherigen Ansprüche, wobei die erste Schwingungsrichtung des Gegenrahmens (25) in Bezug auf den Tragrahmen (20) mit der Drehrichtung des ersten Arms (50) des Sprühauslegers von der offenen Stellung in die geschlossene Stellung übereinstimmt.

5. Sprühmaschine (10) nach einem der vorherigen Ansprüche, wobei der Sprühausleger Folgendes umfasst:
∘ einen zweiten Arm (60), der gemäß einer Gelenkachse (C1) parallel zu der Gelenkachse (C2) des ersten Arms (50) an dem Gegenrahmen (25) angelenkt ist, und
∘ eine Vielzahl von Sprühdüsen, die an dem zweiten Arm (60) installiert sind, um das flüssige Produkt auszugeben,
wobei der zweite Arm (60) spiegelbildlich zu dem ersten Arm (50) in Bezug auf eine Mittelebene des Gegenrahmens (25) angeordnet ist und um seine Gelenkachse (C2) zwischen einer offenen und einer geschlossenen Stellung beweglich ist,
wobei eine zweite Verriegelungsanordnung bereitgestellt ist, um die Schwingung des Gegenrahmens (25) in Bezug auf den Tragrahmen (20) in mindestens einer zweiten Drehrichtung zu verhindern, die der ersten Drehrichtung entgegengesetzt ist, wenn der zweite Arm (60) in der geschlossenen Stellung ist, die zweite Verriegelungsanordnung umfassend:
∘ eine zweite Platte (110), die an dem Gegenrahmen (25) um eine zweite Drehachse (F2) parallel zu der Gelenkachse (C2) des zweiten Arms (60) schwenkt,
∘ eine zweite Feder (115), deren eines Ende mit dem zweiten Arm (60) und deren gegenüberliegendes Ende mit der zweiten Platte (110) verbunden ist,
∘ eine zweite Vertiefung (125), die in der zweiten Platte (110) angefertigt ist, und
∘ einen zweiten Stift (130), der an dem Tragrahmen (20) befestigt ist und eine Längsachse parallel zu der Drehachse der Platte (85) aufweist,
wobei die zweite Platte (110) angepasst ist, um zwischen einer Entriegelungsstellung, in der die zweite Vertiefung (125) von dem zweiten Stift (130) gelöst ist, was die Schwingung des Gegenrahmens (25) in Bezug auf den Tragrahmen (20) zulässt, und einer Verriegelungsstellung, in der die zweite Vertiefung (125) mit dem zweiten Stift (125) gekoppelt ist, was die Schwingung des Gegenrahmens (25) in Bezug auf den Tragrahmen (20) zumindest in der zweiten Schwingungsrichtung verhindert, um die zweite Drehachse (F2) zu schwingen, und
wobei die zweite Feder (115) konfiguriert ist, um die zweite Platte (110) um die zweite Drehpunktachse (F2) in Richtung der Entriegelungsstellung zu drehen, wenn der zweite Arm (60) in der offenen Stellung ist, und die zweite Platte (110) um die zweite Drehpunktachse (F2) in Richtung der Verriegelungsstellung zu drehen, wenn der zweite Arm (60) in der geschlossenen Stellung ist.

6. Sprühmaschine (10) nach Anspruch 5, wobei die zweite Verriegelungsanordnung einen in der zweiten Platte (110) angefertigten zweiten Durchgangsschlitz (120) umfasst, der den zweiten Stift (130) aufnimmt und von dem die zweite Vertiefung (125) abgeleitet ist.

7. Sprühmaschine (10) nach Anspruch 5 oder 6, wobei die zweite Drehpunktachse (F2) der zweiten Platte (110) der zweiten Verriegelungsanordnung mit der Gelenkachse (C2) des zweiten Arms (60) übereinstimmt.

8. Sprühmaschine (10) nach einem der Ansprüche 5 bis 7, wobei die zweite Schwingungsrichtung des Gegenrahmens (25) in Bezug auf den Tragrahmen (20) mit der Drehrichtung des zweiten Arms (60) des Sprühauslegers von der offenen Stellung in die geschlossene Stellung übereinstimmt.

9. Sprühmaschine (10) nach einem der vorherigen Ansprüche, wobei die schwingende Anordnung Folgendes umfasst:
- einen ersten Kipphebel (30), der mit einem ersten Ende, das an dem Tragrahmen (20) in Bezug auf eine erste Drehachse (R1) angelenkt ist, und einem gegenüberliegenden zweiten Ende, das an dem Gegenrahmen (25) in Bezug auf eine zweite Drehachse (R2) angelenkt ist, versehen ist; und
- einen zweiten Kipphebel (35), der mit einem ersten Ende das an dem Tragrahmen (20) in Bezug auf eine dritte Drehachse (R3) angelenkt ist, und mit einem entgegengesetzten zweiten Ende, das an dem Gegenrahmen (25) in Bezug auf eine vierte Drehachse (R4) angelenkt ist, versehen ist, wobei die erste Drehachse (R1), die zweite Drehachse (R2), die dritte Drehachse (R3) und die vierte Drehachse (R4) parallel und verschieden sind und außerdem parallel zu der Gelenkachse (C1) des ersten Arms (50) sind.

10. Sprühmaschine (10) nach Anspruch 9, wobei der zweite Kipphebel (35) einen linearen Aktuator umfasst, der mit einem Zylinder (35A) und mit einem Schaft (35B) versehen ist, der in Bezug auf den Zylinder (35A) zwischen einer ausgefahrenen Stellung und einer eingefahrenen Stellung verschiebbar ist, um den Abstand zwischen dem ersten Ende und dem zweiten Ende des zweiten Kipphebels (35) zu verändern.

## Revendications

1. Pulvérisateur (10) comprenant :
- un cadre de support (20) adapté pour être relié à un véhicule de remorquage,
- un contre-châssis oscillant (25) relié au cadre de support (20) par un dispositif oscillant,
- une rampe de pulvérisation comprenant au moins :
• un premier bras (50) articulé au contre-châssis (25) suivant un axe d'articulation (C1), et
• une pluralité de buses de pulvérisation installées sur le premier bras (50) permettant de distribuer un produit liquide, le premier bras (50) étant mobile autour de l'axe d'articulation (C1) entre une position ouverte et une position fermée,
- un dispositif de verrouillage adapté pour empêcher le contre-châssis (25) d'osciller par rapport au cadre de support (20), dans au moins une première direction d'oscillation, lorsque le premier bras (50) est en position fermée, **caractérisé en ce que** ledit dispositif de verrouillage comprend :
• une plaque (85) pivotant sur le contre-châssis (25) suivant un axe d'appui (F1) parallèle à l'axe d'articulation (C1) du premier bras (50),
• un ressort (90) ayant une extrémité reliée au premier bras (50) et une extrémité opposée reliée à la plaque (85),
• une empreinte (100) faite dans la plaque (85), et
• une goupille (105) fixée au cadre de support (20) et dont l'axe longitudinal est parallèle à l'axe de pivotement de la plaque (85),
dans lequel la plaque (85) est adaptée pour osciller autour de l'axe d'appui (F1) entre une position de déverrouillage, dans laquelle l'empreinte (100) est libérée de la goupille (105) permettant l'oscillation du contre-châssis (25) par rapport au cadre de support (20), et une position de verrouillage, dans laquelle l'empreinte (100) est couplée à la goupille (105) empêchant l'oscillation du contre-châssis (25) par rapport au cadre de support (20) dans au moins ladite première direction d'oscillation, et
dans lequel le ressort (90) est configuré pour faire tourner la plaque (85) autour de l'axe d'appui (F1) vers la position de déverrouillage, lorsque le premier bras (50) est en position ouverte, et pour faire tourner la plaque (85) autour de l'axe d'articulation vers la position de verrouillage, lorsque le premier bras (50) est en position fermée.

2. Pulvérisateur (10) selon la revendication 1, dans lequel le dispositif de verrouillage comprend une fente débouchante (95) pratiquée dans la plaque (85), qui accueille la goupille (105) et d'où provient l'empreinte (100).

3. Pulvérisateur (10) selon l'une quelconque des revendications précédentes, dans lequel l'axe d'appui (F1) de la plaque (85) du dispositif de verrouillage coïncide avec l'axe d'articulation (C1) du premier bras (50).

4. Pulvérisateur (10) selon l'une quelconque des revendications précédentes, dans lequel ladite première direction d'oscillation du contre-châssis (25) par rapport au cadre de support (20) est concordante avec la direction de rotation du premier bras (50) de la rampe de pulvérisation de la position ouverte à la position fermée.

5. Pulvérisateur (10) selon l'une quelconque des revendications précédentes, dans lequel la rampe de pulvérisation comprend :
• un deuxième bras (60) articulé au contre-châssis (25) suivant un axe d'articulation (C2) parallèle à l'axe d'articulation (C1) du premier bras (50), et
• une pluralité de buses de pulvérisation installées sur le deuxième bras (60) pour distribuer le produit liquide,
le deuxième bras (60) étant disposé de manière spéculaire au premier bras (50) par rapport à un plan médian du contre-châssis (25) et étant mobile autour de son axe d'articulation (C2) entre une position ouverte et une position fermée,
un deuxième dispositif de verrouillage étant prévu pour empêcher l'oscillation du contre-châssis (25) par rapport au cadre de support (20), dans au moins un deuxième sens de rotation opposé au premier sens de rotation, lorsque le deuxième bras (60) est en position fermée, ledit deuxième dispositif de verrouillage comprenant :
• une deuxième plaque (110) pivotant sur le contre-châssis (25) suivant un deuxième axe d'appui (F2) parallèle à l'axe d'articulation (C2) du deuxième bras (60),
• un deuxième ressort (115) ayant une extrémité reliée au deuxième bras (60) et une extrémité opposée reliée à la deuxième plaque (110),
• une deuxième empreinte (125) faite dans la deuxième plaque (110), et
• une deuxième goupille (130) fixée au cadre de support (20) et dont l'axe longitudinal est parallèle à l'axe de pivotement de la plaque (85),
dans lequel la deuxième plaque (110) est adaptée pour osciller autour du deuxième axe d'appui (F2) entre une position de déverrouillage, dans laquelle la deuxième empreinte (125) est libérée de la deuxième goupille (130) permettant l'oscillation du contre-châssis (25) par rapport au cadre de support (20), et une position de verrouillage, dans laquelle la deuxième empreinte (125) est couplée à la deuxième goupille (105) empêchant l'oscillation du contre-châssis (25) par rapport au cadre de support (20) dans au moins ladite deuxième direction d'oscillation, et
dans lequel le deuxième ressort (115) est configuré pour faire tourner la deuxième plaque (110) autour du deuxième axe d'appui (F2) vers la position de déverrouillage, lorsque le deuxième bras (60) est en position ouverte, et pour faire tourner la deuxième plaque (110) autour du deuxième axe d'appui (F2) vers la position de verrouillage, lorsque le deuxième bras (60) est en position fermée.

6. Pulvérisateur (10) selon la revendication 5, dans lequel le deuxième dispositif de verrouillage comprend une deuxième fente débouchante (120) pratiquée dans la deuxième plaque (110), qui accueille la deuxième goupille (130) et d'où provient l'empreinte (125).

7. Pulvérisateur (10) selon l'une des revendications 5 ou 6, dans lequel le deuxième axe d'appui (F2) de la deuxième plaque (110) du deuxième dispositif de verrouillage coïncide avec l'axe d'articulation (C2) du deuxième bras (60).

8. Pulvérisateur (10) selon l'une quelconque des revendications 5 à 7, dans lequel ladite deuxième direction d'oscillation du contre-châssis (25) par rapport au cadre de support (20) est concordante avec la direction de rotation du deuxième bras (60) de la rampe de pulvérisation de la position ouverte à la position fermée.

9. Pulvérisateur (10) selon l'une quelconque des revendications précédentes, dans lequel le dispositif d'oscillation comprend :
- un premier culbuteur (30) doté d'une première extrémité articulée au cadre de support (20) par rapport à un premier axe de rotation (R1), et d'une deuxième extrémité opposée articulée au contre-châssis (25) par rapport à un deuxième axe de rotation (R2) ; et
- un deuxième bras oscillant (35) pourvu d'une première extrémité articulée au cadre de support (20) par rapport à un troisième axe de rotation (R3), et d'une deuxième extrémité opposée articulée au contre-châssis (25) par rapport à un quatrième axe de rotation (R4), le premier axe de rotation (R1), le deuxième axe de rotation (R2), le troisième axe de rotation (R3) et le quatrième axe de rotation (R4) étant parallèles et distincts, et en outre parallèles à l'axe d'articulation (C1 ) du premier bras (50).

10. Pulvérisateur (10) selon la revendication 9, dans lequel le deuxième culbuteur (35) comprend un actionneur linéaire muni d'un cylindre (35A) et d'une tige (35B) qui peut coulisser par rapport au cylindre (35A) entre une position extraite et une position rétractée, pour faire varier la distance entre ladite première extrémité et ladite deuxième extrémité du deuxième culbuteur (35).
